# EUROPÄISCHE PATENTANMELDUNG

(11) **EP 0 650 817 A1**
(43) Veröffentlichungstag der Anmeldung: **03.05.1995**
(21) Anmeldenummer: 94108994.8
(22) Anmeldetag: 13.06.1994
(51) Int. Cl.: B29C 45/64

(54) **Vorrichtung zum Aufbau des Schliessdrucks insbesondere an Spritzgiessmaschinen**

(30) Priorität: 27.10.1993 DE 4336572
(71) Anmelder: Ferromatik Milacron Maschinenbau GmbH, D-79364 Malterdingen (DE)
(72) Erfinder: Steger, Reinhard, 79108 Freiburg (DE)
(74) Vertreter: Röther, Peter, Dipl.-Phys.

(57) **Zusammenfassung**

Bei einer Vorrichtung zum Aufbau des Schließdrucks insbesondere an Spritzgießmaschinen mit einer feststehenden und einer beweglichen Formaufspannplatte, zwischen denen ein Spritzgießwerkzeug befestigt ist und einem Verfahrmechanismus (8) für die bewegliche Formaufspannplatte (4) zum Öffnen und Schließen des Spritzgießwerkzeuges (5) ist erfindungsgemäß vorgesehen, daß der Verfahrmechanismus (8) durch eine Verriegelungseinrichtung (16) in der geschlossenen Stellung des Spritzgießwerkzeugs verriegelbar ist und zwischen Verfahrmechanismus (8) und beweglicher Formaufspannplatte (4) mindestens ein Körper (13) aus einem positiv magnetrostriktivem Material angeordnet ist, welcher jeweils von einer ein magnetisches Wechselfeld erzeugenden Magnetspule (21) umgeben ist.

## Beschreibung

Die Erfindung betrifft eine Vorrichtung zum Aufbau des Schließdrucks insbesondere an Spritzgießmaschinen gemäß dem Oberbegriff des Patentanspruchs 1.

Beim Spritzgießen beispielsweise von aus thermoplastischem Kunststoffmaterial bestehenden Teilen wird die Kunststoffschmelze unter hohem Druck in den Formhohlraum des Spritzgieß-Werkzeuges eingespritzt. Für dessen zuverlässigen Verschluß muß durch eine ausreichende Gegenkraft, die Schließkraft, gesorgt werden. Diese Schließkraft oder auch Formzuhaltekraft muß dabei größer sein als die beim Einspritzvorgang im Formhohlraum entstehende Auftreibkraft.

Die hierfür notwendigen Schießeinheiten werden vollhydraulisch, hydraulisch-mechanisch oder elektromechanisch bewegt. Bei der Einrichtung eines Formwerkzeuges ist somit darauf zu achten, daß die Schließeinheit so eingestellt ist, daß nach dem Zusammenfahren der Werkzeugteile eine Kraftreserve zum sicheren Zuhalten gegen den Einspritzdruck verbleibt.

Bei hydraulischen Schließeinheiten wird die bewegliche Formaufspannplatte mit Hilfe von hydraulischen Schnellfahrzylindern auf die feststehende Formaufspannplatte zugefahren bis die Form geschlossen ist. Beim Einspritzen müssen diese Zylinder einen entsprechenden Nachdruck erzeugen, was naturgemäß ein großes Nachsaugvolumen an Hydrauliköl bedingt. Das ist schon unter Umweltschutz-Gesichtspunkten nachteilig. Darüber hinaus besteht die Gefahr, daß die Hydraulik gerade im Zeitpunkt des Einspritzens ausfällt, wodurch zum einen eine Gefährdung für das Bedienungspersonal entsteht und zum anderen unbrauchbare Teile produziert werden.

Die Schließeinheit kann jedoch auch beispielsweise aus einem Kniehebelgetriebe bestehen. Beim Aufbau der Schließkraft werden die Kniehebellager dynamisch stark belastet, was zu einem schnellen Verschleiß derselben führt.

Bei elektromotorisch angetriebenen Schließeinheiten, beispielweise mit Kugelumlaufspindel oder Trapezgewinden tritt in der Einspritzphase eine enorme Motorbelastung auf.

Allen diesen Schließeinheiten gemeinsam ist, daß die unterschiedlichen Funktionen dieser Einheiten, einerseits die schnelle Zufahr- und Öffnungs-Bewegung bei geringer Kraft, andererseits Aufbau einer großen Kraft bei kleiner Bewegung vom gleichen System bewältigt werden müssen, welches daher entsprechend aufwendig und stabil ausgeführt werden muß.

Der Erfindung liegt daher die Aufgabe zugrunde, eine Vorrichtung der eingangs genannten Art so auszubilden, daß die eigentliche Schließbewegung und der anschließende Schließdruckaufbau voneinander entkoppelt sind.

Die Erfindung löst diese Aufgabe mit Hilfe der Merkmale des kennzeichnenden Teils des Patentanspruchs 1.

Vorteilhafte Ausgestaltungen und Weiterbildungen der Erfindung sind Gegenstand der Unteransprüche.

Grundlegender Gedanke der Erfindung ist der Einsatz von magnetostriktiven Werkstoffen zur Erzeugung der für den Spritzgußprozeß notwendigen Formschließkraft.

Magnetostriktive Werkstoffe sind spezielle Legierungen, die in einem Magnetfeld einer bestimmten Frequenz und Stärke eine definierte Längenänderung erfahren bzw. eine definierte Kraft erzeugen. Die Längenänderung hängt dabei einerseits von der verwendeten Legierung, andererseits von der Länge des eingesetzten magnetostriktiven Bauteils und von der Größe des aufgebauten Magnetfeldes ab. Die Kraft ist dabei proportinal zur Querschnittsfläche.

Die Größe der Längenänderung liegt normalerweise im Bereich von 0-1mm. Bei einem Magnetfeld von 10⁵A/m liegt die erreichbare Kraft im Bereich von 20N/mm², d.h. bei einem Probekörperdurchmesser von etwa 120 mm kann eine Kraft von ca. 200kN erreicht werden.

Mit Hilfe der erfindungsgemäßen Lösung ist es möglich, den Schnellverfahrmechanismus, der lediglich die relativ geringe Kraft zum Verfahren der beweglichen Formaufspannplatte aufbringen muß, leichter und preiswerter auszubilden. Durch eine sichere und stabile Verriegelung des Verfahrmechanismus in seiner Schließstellung wird ein Gegenlager geschaffen, das die Reaktionskräfte aufnehmen kann, die auftreten, wenn durch Anlegen des erforderlichen Magnetfelds der/die magnetostriktive(n) Körper durch ihre Ausdehnung die gewünschte Schließkraft erzeugen.

Somit tritt bei Verwendung von hydraulischen Verfahrzylindern kein Nachsaugvolumen auf, und die mechanisch beanspruchten Bauteile der Zylinder werden entlastet.

Ebenfalls entlastet werden bei Verwendung von Kniehebelgetrieben die Kniehebellager, da diese unter Last nur noch statisch belastet werden.

Bei elektromechanisch betriebenen Schließmechanismen mit beispielweise Kugelumlaufspindel oder vergleichbaren Bewegungseinheiten werden beim Schließdruckaufbau die Motoren nicht mehr zusätzlich belastet, wodurch sich deren Lebensdauer erhöht.

Wichtig bei allen Ausführungsformen, ob nun gemäß Anspruch 2, 3 oder 4 ist, daß die schnelle Zufahrbewegung über eine große Distanz bei relativ geringem Kraftaufwand und der Schließdruckaufbau bei kurzer Bewegungslänge und hohem Kraftaufwand streng voneinander getrennt sind.

Auch bereits vorhandene Maschinen können relativ schnell und einfach nachgerüstet werden.

Darüber hinaus gewährleistet die erfindungsgemäße Ausgestaltung durch Änderung der magnetischen Feldstärke eine schnelle und problemlose Regelung der aufzubringenden Schließkraft.

Am Ende des Einspritzvorganges wird das magnetische Feld abgeschaltet, die Verriegelung des Verfahrmechanismus aufgehoben und die Form kann geöffnet werden.

Gemäß Anspruch 6 wird als magnetostriktives Material für die Kraftkörper die Legierung Tb_{0.27} Dy_{0.73} Fe₂ vorgeschlagen, ein Material mit besonders guten magnetostriktiven Eigenschaften. Der Werkstoff reagiert nahezu verzögerungsfrei auf Änderungen des Magnetfeldes. Ein 10 cm langer Stab dehnt sich in nur 50 Mykrosekunden um mehr 0,1 mm aus. Er ermöglicht daher die direkte Kopplung elektrischer und mechanischer Systeme.

Diese Legierung kann hohen Druckspannungen standhalten in der Größenordnung von mehreren 100 Megapascal. Dadurch ist es in der Lage, die im vorliegenden Fall benötigten großen mechanischen Kräfte zu erzeugen. Hinsichtlich der Erzeugung niederfrequenter mechanischer Energie im Bereich von 0-5kHz ist die Legierung sämtlichen anderen verfügbaren Werkstoffen überlegen.

Die zur Magnetisierung verwendeten stromdurchflossenen Spulen weisen eine geringe Impedanz auf und werden mit relativ niedriger Spannung betrieben.

Ähnliche Kraftkörper können natürlich auch auf der Einspritzseite der Maschine vorgesehen sein, beipielsweise zum Aufbringen der Düsenanlagekraft.

Eine weitere vorteilhafte Ausgestaltung der Erfindung ist Gegenstand des Anspruchs 7. Dadurch, daß die bewegliche Formaufspannplatte mittels der axial verschiebbaren Holme verfahren wird, ergibt sich eine noch kompaktere Bauart der Vorrichtung, da die Holme selbst Teile des Verfahrmechanismus sind. So können beispielweise die Holme als die Kolbenstangen der den Verfahrmechanismus bildenden Hydraulikzylinder sein.

Bevorzugt werden die magnetostriktiven Körper gemäß Anspruch 8 so angeordnet, daß sie die bewegliche Formaufspannplatte mit der die freien Enden der Holme verbindenden Aufnahme verbinden. Die Aufnahme dient bei zugefahrenem Formwerkzeug als Widerlager für die magnetostriktiven Körper, wenn diese durch Anliegen des Magnetfeldes die Formzuhaltekraft aufbringen.

Alternativ können die Körper jedoch auch zwischen den Bauteilen des Verfahrmechanismus und der feststehenden Formaufspannplatte angeordnet sein.

Die Erfindung wird im folgenden anhand von Zeichnungen näher erläutert.

Es zeigen:
Fig. 1 schematisch eine Spritzgießmaschine ohne Einspritzeinheit dargestellt mit hydraulischer Schnellfahreinrichtung,
Fig. 2 schematisch eine Spritzgießmaschine mit kniehebelgetriebener Verfahreinrichtung (ebenfalls ohne Einspritzeinheit dargestellt),
Fig. 3 alternative Ausführungsform mit verschiebbaren Holmen.

Gleiche Teile sind in den Figuren mit gleichen Bezugszeichen versehen.

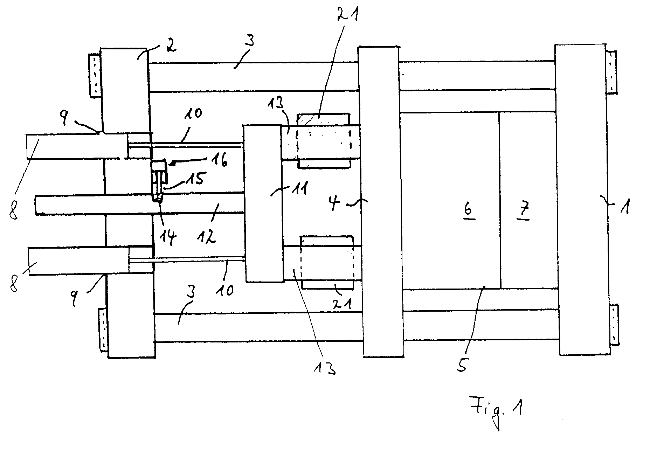

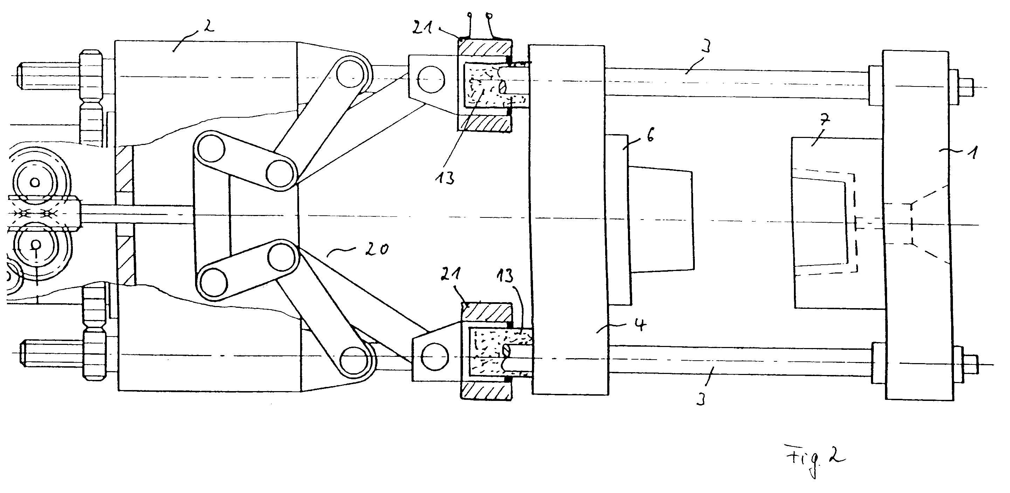

Der in den Fig. 1 und 2 dargestellte Teil einer Spritzgießmaschine weist eine feststehende Formaufspannplatte 1 und eine beim Spritzgießbetrieb ebenfalls feststehende Endplatte 2 auf, die durch in der Regel vier Holme 3, von denen nur zwei dargestellt sind, miteinander verbunden sind. Auf den Holmen 3 verschiebbar ist zwischen den Platten 1 und 2 eine bewegliche Formaufspannplatte 4 geführt. Zwischen der feststehenden Formaufspannplatte 1 und der beweglichen Formaufspannplatte 4 ist ein Spritzgießwerkzeug 5 befestigt, welches aus zwei Formhälften 6 und 7 besteht, die den Formhohlraum einschließen. In der Fig. 1 ist das Spritzgießwerkzeug in seinem geschlossenen Zustand dargestellt.

Zum Verfahren der beweglichen Formaufspannplatte 4 dienen im Ausführungsbeispiel gemäß Fig. 1 Hydraulikzylinder 8, die in Ausnehmungen 9 in der Endplatte 2 fixiert sind und deren Kolbenstangen 10 an einer Zwischenplatte 11 angreifen. Zur besseren Führung der Zwischenplatte 11 dient eine Stange 12, die in der Endplatte 2 verschiebbar gelagert ist und ebenfalls an der Zwischenplatte 11 angreift.

Die Zwischenplatte 11 ist auf der den Hydraulikzylindern 8 entgegengesetzten Seite mit Hilfe mehrerer beispielsweise zylindrischer Körper 13, von denen lediglich zwei dargestellt sind, mit der beweglichen Formaufspannplatte 4 verbunden.

Die Körper bestehen aus einer magnetostriktiven Legierung, beispielsweise aus Tb_{0.27} Dy _{0.73} Fe ₂. Jeder magnetostriktive Körper 13 ist von einer Magnetspule 21 umgeben, die ein magnetisches Wechselfeld erzeugt.

In der Führungsstange 12 befindet sich eine Ausnehmung 14, in die der Riegel 15 einer Verriegelungseinheit 16 greift, die an der Endplatte angeordnet ist.

Ein im Prinzip ähnlicher Aufbau ist in der Fig. 2 dargestellt. Das Formwerkzeug ist allerdings geöffnet und die für das Schließen und Öffnen verantwortliche Schnellverfahreinrichtung ist ein Kniehebelgetriebe 20. Auch bei dieser Ausführungsform greifen die Enden der Kniehebel nicht direkt an der beweglichen Formaufspannplatte an, sondern an auf dieser Platte befestigten Körpern 13 aus magnetostriktivem Material, die ebenfalls von Magnetspulen 21 umgeben sind.

Der Spritzvorgang gestaltet sich gemäß der Erfindung folgendermaßen:
Die bewegliche Formaufspannplatte 4 wird mittels der Schnellfahreinrichtung auf die feststehende Formaufspannplatte 1 zugefahren, bis das Spritzgießwerkzeug 5 geschlossen ist. In dieser Stellung wird die Schnellverfahreinrichtung gesperrt. Das geschieht beispielsweise bei einem aus Hydraulikzylindern bestehenden Verfahrmechanismus (Fig. 1) dadurch, daß der Riegel 15 von der Verriegelungseinrichtung 16 in die in der Führungsstange 12 vorgesehene Ausnehmung 14 eingeschoben wird. Nach der Verriegelung werden über die Magnetspulen 21, die die magnetostriktiven Körper 13 umgeben, die Magnetfelder aufgebaut, die die magnetostriktiven Körper 13 zur Längenänderung veranlassen. Hierdurch üben diese Körper 13 die zur Kompensation des Einspritzdrucks erforderlichen Kräfte auf die bewegliche Formaufspannplatte und damit auf das Spritzgießwerkzeug aus. Nachdem der Einspritzvorgang abgeschlossen ist und sich das eingespritzte Material verfestigt hat, werden die Magnetfelder abgeschaltet, die Sperrung des Schnellverfahrmechanismus aufgehoben, und die Formhälften 6 und 7 werden auseinandergefahren, damit das hergestellte Spritzgußteil entnommen werden kann.

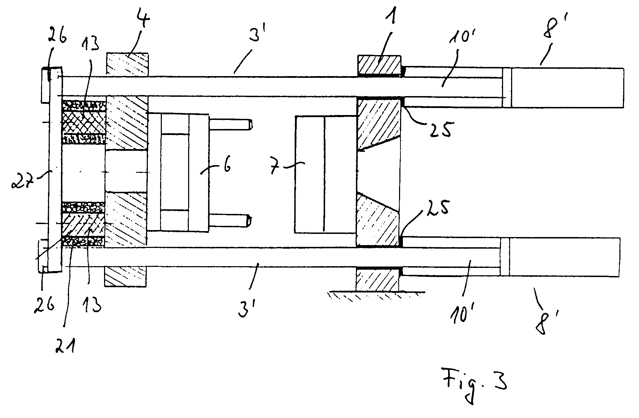

In der Fig. 3 ist eine alternative Ausführungsform der Erfindung dargestellt, bei der die die feststehende Formaufspannplatte 1 und die bewegliche Formaufspannplatte 4 verbindenden Holme 3' axial verschiebbar sind.

In diesem Ausführungsbeispiel dienen die Holme 3' als Kolbenstangen 10' der den Verfahrmechanismus bildenden Hydraulikzylinder 8', die auf der Einspritzseite an der feststehenden Formaufspannplatte 1 befestigt sind. Die Holme 3' sind in die Formaufspannplatte 1 durchstoßenden Führungen 25 axial verschiebbar geführt. In ihrem weiteren Verlauf durchstoßen die Holme 3' die bewegliche Formaufspannplatte 4. Die freien Enden 26 der Holme 3' sind durch eine als Jochplatte zu bezeichnende Aufnahme 27 miteinander verbunden. Zwischen der Aufnahme 27 und der beweglichen Formaufspannplatte 4 sind die magnetostriktiven Körper 13 mit den sie umgebenden Magnetspulen 21 angeordnet.

Durch Einfahren der Holme in die Hydraulikzylinder 8' wird die Aufnahme 27 zusammen mit den magnetostriktiven Körpern 13 und der beweglichen Formaufspannplatte 4 auf die feststehende Formaufspannplatte 1 zugefahren, wodurch das dazwischen befindliche Formwerkzeug geschlossen wird. Nach der Verriegelung (nicht dargestellt) der Holme 3' in der Geschlossenstellung werden die Magnetfelder angelegt und die magnetostriktiven Körper 13 dehnen sich aus. Dadurch, daß diese an der Aufnahme 27 abgestützt sind, wirkt die Kraft auf die bewegliche Formaufspannplatte 4, wodurch der erforderliche Zuhaltedruck erzeugt wird.

## Patentansprüche

1. Vorrichtung zum Aufbau des Schließdrucks insbesondere an Spritzgießmaschinen mit einer feststehenden und einer beweglichen Formaufspannplatte, zwischen denen ein Spritzgießwerkzeug angeordnet ist und einem Verfahrmechanismus für die bewegliche Formaufspannplatte zum Öffnen und Schließen des Spritzgießwerkzeuges,
dadurch gekennzeichnet,
daß der Verfahrmechanismus durch eine Verriegelungseinrichtung (16) in der geschlossenen Stellung des Spritzgießwerkzeugs (5) verriegelbar ist und zwischen Verfahrmechanismus und einer der Formaufspannplatten (1,4) mindestens ein Körper (13) aus einem positiv magnetostriktiven Material angeordnet ist, welcher jeweils von einer ein magnetisches Wechselfeld erzeugenden Magnetspule (21) umgeben ist.

2. Vorrichtung nach Anspruch 1,
dadurch gekennzeichnet,
daß der Verfahrmechanismus durch hydraulische Schnellfahrzylinder (8) gebildet ist, deren Kolbenstangenenden über die magnetostriktiven Körper (13) mit der beweglichen Formaufspannplatte (4) verbunden sind.

3. Vorrichtung nach Anspruch 1,
dadurch gekennzeichnet,
daß der Verfahrmechanismus ein Kniehebelgetriebe ist.

4. Vorrichtung nach Anspruch 1,
dadurch gekennzeichnet,
daß der Verfahrmechanismus aus elektromotorisch antreibbaren Kugelumlaufspindeln gebildet ist.

5. Vorrichtung nach einem der Ansprüche 1 bis 4,
dadurch gekennzeichnet,
daß die Feldstärke der Magnetspulen (21) einstellbar ist.

6. Vorrichtung nach einem der Ansprüche 1 bis 5,
dadurch gekennzeichnet,
daß die magnetostriktiven Körper (13) aus der Legierung Tb_{0.27} Dy_{0.73} Fe₂ bestehen.

7. Vorrichtung nach einem oder mehreren der Ansprüche 1 bis 6,
dadurch gekennzeichnet,
daß die bewegliche Formaufspannplatte (4) auf in Führungen (25) in der feststehenden Formaufspannplatte (1) geführten Holmen (3') angeordnet ist, die in axialer Richtung relativ zur feststehenden Formaufspannplatte (1) mit Hilfe des Verfahrmechanismus (8,20) verschiebbar sind.

8. Vorrichtung nach Anspruch 7,
dadurch gekennzeichnet,
daß die magnetostriktiven Körper (13) auf der von der feststehenden Formaufspannplatte (1) abgewandten Seite der beweglichen Formaufspannplatte (4) zwischen dieser und der die freien Enden (26) der Holme (3') verbindenden und als Widerlager für die magnetostriktiven Körper (13) dienenden Aufnahme (27) angeordnet sind.
